# EUROPÄISCHE PATENTSCHRIFT

(11) **EP 3 787 128 B1**
(45) Veröffentlichungstag und Bekanntmachung des Hinweises auf die Patenterteilung: **17.07.2024**
(21) Anmeldenummer: 20202736.3
(22) Anmeldetag: 27.11.2018
(51) Int. Cl.: H01R 13/64, H01R 13/71, H01R 13/625

(54) **STECKVERBINDUNG**
CONNECTOR
CONNECTEUR ENFICHABLE

(30) Priorität: 23.01.2018 DE 102018101431
(43) Veröffentlichungstag der Anmeldung: 03.03.2021
(62) Teilanmeldung aus: 19216920.9
(73) Patentinhaber: Neutrik AG, 9494 Schaan (LI)
(72) Erfinder: DOBLER, Oliver, 6774 Tschagguns (AT)
(74) Vertreter: Kaminski Harmann

(56) Entgegenhaltungen:
- EP-A2- 2 209 171
- WO-A1-2019/138196
- US-A- 2 986 612
- US-A- 3 339 039
- US-A- 3 351 887
- US-A- 3 725 840
- US-A1- 2002 177 373
- US-B1- 6 394 856

## Beschreibung

Die vorliegende Erfindung betrifft eine Steckverbindung zur Übertragung von elektrischem Strom gemäss dem Oberbegriff von Patentanspruch 1.

Derartige Steckverbindungen weisen oftmals einen Aufbau mit einem männlichen Steckverbinder und einem weiblichen Steckverbinder auf, wobei der männliche Steckverbinder einen Einsteckfortsatz mit einer Einsteckfortsatzmantelwand und elektrischen Kontakten aufweist, wobei in einem von der Einsteckfortsatzmantelwand umgebenen Einsteckfortsatzinnenraum die elektrischen Kontakte angeordnet sind, und der weibliche Steckverbinder eine Einsteckfortsatzaufnahme mit einer Einsteckfortsatzaufnahmemantelwand und elektrischen Gegenkontakten aufweist, wobei in einem von der Einsteckfortsatzaufnahmemantelwand umgebenen Einsteckfortsatzaufnahmeinnenraum die elektrischen Gegenkontakte angeordnet sind, wobei an einer Mantelwand, welche die Einsteckfortsatzmantelwand oder die Einsteckfortsatzaufnahmemantelwand ist, zumindest ein Vorsprung angeordnet ist und die andere dieser Mantelwände zumindest einen, zu dem Vorsprung korrespondierenden Aufnahmeschlitz aufweist, wobei in einem unbeschädigten Zustand des Vorsprungs und des Aufnahmeschlitzes der Einsteckfortsatz ausschliesslich ausgehend von einer eindeutigen, von dem Vorsprung und dem Aufnahmeschlitz vorgegebenen Einsteckstellung in einer Einsteckrichtung in die Einsteckfortsatzaufnahme einsteckbar ist.

Solche Steckverbindungen zur Übertragung von elektrischem Strom sind aus dem Stand der Technik bekannt und z.B. in den Gemeinschaftsgeschmacksmustern 001229827, insbesondere 001229827-0001 und -0006, 002677641, insbesondere 002677641-0001, und 001393623-0001 und -0002 gezeigt. Durch die Vorsprünge und die jeweils korrespondierenden Aufnahmeschlitze wird bei sachgerechter Bedienung beim Stand der Technik verhindert, dass nicht zusammengehörige Steckverbinder ineinander eingesteckt werden. Weiters wird sichergestellt, dass zusammengehörige Steckverbinder bei sachgemässem Gebrauch nur in der vorgegebenen bzw. vorgesehenen Einsteckstellung ineinandergesteckt werden können.

Die Praxis zeigt allerdings, dass es durch unsachgemässen Gebrauch, aber auch durch Abnutzung an den Vorsprüngen und/oder Aufnahmeschlitzen dazu kommen kann, dass die Steckverbinder in einer nicht vorgesehenen Stellung und/oder Kombination ineinandergesteckt werden. Hierdurch kann es passieren, dass versehentlich die elektrischen Kontakte mit hierfür nicht vorgesehenen elektrischen Gegenkontakten elektrisch kontaktiert, also elektrisch leitend verbunden werden. Dies kann sowohl zu einer Gefährdung der an die Steckverbinder angeschlossenen Kabel und Geräte als auch der diese Kabel und Geräte bzw. Steckverbinder bedienenden Personen führen. EP 2 209 171 A2 offenbart eine Steckverbindung gemäß dem Oberbegriff von Anspruch 1.

Aufgabe der Erfindung ist es, eine zusätzliche Massnahme bereitzustellen, mit der bei Steckverbindungen der oben genannten Art verhindert werden kann, dass es durch Zusammenstecken von nicht zusammengehörigen Steckverbindern und/oder durch Zusammenstecken von Steckverbindern in einer hierfür nicht vorgesehenen Stellung aus Versehen zum falschen elektrischen Kontaktieren der elektrischen Kontakte mit den elektrischen Gegenkontakten kommt.

Zur Lösung dieser Aufgabe schlägt die Erfindung eine Steckverbindung gemäss Patentanspruch 1 vor.

Es ist bei der Erfindung somit vorgesehen, dass dadurch gekennzeichnet, dass das Formteil relativ zu den Kontakten und das Gegenformteil relativ zu den Gegenkontakten ausschliesslich in nur einer genau definierten Position und Ausrichtung angeordnet ist. Basis dafür ist eine Konstruktion, bei welcher der männliche Steckverbinder im Einsteckfortsatzinnenraum zusätzlich zumindest ein Formteil und der weibliche Steckverbinder im Einsteckfortsatzaufnahmeinnenraum zusätzlich zumindest ein Gegenformteil aufweisen, wobei das Formteil und das Gegenformteil gemeinsam eine Sperrvorrichtung zur Verhinderung eines elektrischen Kontaktierens der elektrischen Kontakte mit den elektrischen Gegenkontakten bei einem Einstecken des Einsteckfortsatzes in die Einsteckfortsatzaufnahme ausgehend von einer, von der eindeutigen vorgegebenen Einsteckstellung abweichenden Stellung bilden.

Durch das Formteil im Einsteckfortsatzinnenraum des männlichen Steckers und das Gegenformteil im Einsteckfortsatzaufnahmeinnenraum des weiblichen Steckverbinders wird somit eine zusätzliche Sicherungsmassnahme bereitgestellt, welche verhindert, dass die elektrischen Kontakte des männlichen Steckverbinders versehentlich falsch mit den elektrischen Gegenkontakten des weiblichen Steckverbinders elektrisch leitend verbunden, also elektrisch kontaktiert werden. Sollte es bei männlichen und/oder weiblichen Steckverbindern erfindungsgemässer Steckverbindungen durch Abrieb, Abnutzung oder sonstigen Verschleiss zu Beschädigungen oder gar zum vollständigen Verschwinden der Vorsprünge und/oder Aufnahmeschlitze kommen, sodass diese nicht mehr sicherstellen können, dass der männliche und der weibliche Steckverbinder ausschliesslich ausgehend von der eindeutigen vorgegebenen Einsteckstellung, also in der eigentlich vorgesehenen Art und Weise, ineinandergesteckt werden können, so bilden das Formteil und das korrespondierende Gegenformteil immer noch eine zusätzliche Sicherungsmassnahme, welche beim falschen Ineinanderstecken von weiblichem und männlichem Steckverbinder immer noch dafür sorgt, dass es zumindest nicht zu einem falschen elektrischen Kontaktieren der elektrischen Kontakte und der elektrischen Gegenkontakte kommt. Das Gleiche gilt, wenn die Steckverbinder vorsätzlich oder versehentlich, in der Regel unter entsprechender Gewaltanwendung, falsch ineinandergesteckt werden. Auch in diesem Fall kann durch das Zusammenwirken von Formteil und Gegenformteil zumindest ein falsches elektrisches Kontaktieren der elektrischen Kontakte mit den elektrischen Gegenkontakten verhindert werden.

In der Regel sind die Vorsprünge und/oder Aufnahmeschlitze am Einsteckfortsatz nach aussen weisend, auf einer vom Einsteckfortsatzinnenraum wegweisenden Oberfläche bzw. Aussenfläche der Einsteckfortsatzmantelwand angeordnet. Dies hat zur Folge, dass sie einem erhöhten Verschleiss ausgesetzt sind und dadurch beschädigt oder sogar ganz entfernt werden können. Das Anordnen des Formteils im Einsteckfortsatzinnenraum und des Gegenformteils im Einsteckfortsatzaufnahmeinnenraum hat den Vorteil, dass das Formteil und das Gegenformteil von der entsprechenden Einsteckfortsatzmantelwand bzw. der entsprechenden Einsteckfortsatzaufnahmemantelwand gegen äussere Einflüsse und insbesondere gegen Abrieb oder andere Beeinträchtigungen besonders gut geschützt ist bzw. sind, was zur sicheren Verhinderung eines elektrischen Kontaktierens der elektrischen Kontakte mit den jeweils falschen elektrischen Gegenkontakten weiter beiträgt. Der Vollständigkeit halber wird darauf hingewiesen, dass das elektrische Kontaktieren auch als elektrisch leitfähiges Miteinanderverbinden der elektrischen Kontakte mit den elektrischen Gegenkontakten bezeichnet werden könnte.

Mit erfindungsgemässen Steckverbindungen wird allgemein gesprochen elektrischer Strom übertragen. Es kann sich dabei sowohl um eine elektrische Signalübertragung, bei der eher geringe elektrische Leistungen übertragen werden, als auch um eine elektrische Übertragung von Leistung mit entsprechend hohen Stromstärken und/oder Spannungen handeln. Erfindungsgemässe Steckverbindungen können also sowohl zur elektrischen Datenübertragung als auch zur elektrischen Leistungsübertragung z.B. zur Stromversorgung von elektrischen Geräten ausgelegt sein. Man könnte auch von Steckverbindungen zur Übertragung von elektrischer Energie und/oder elektrischen Signalen sprechen. Auch Mischformen davon sind möglich. Darüber hinaus müssen erfindungsgemässe Steckverbindungen auch nicht zwingend darauf beschränkt sein, nur elektrische Ströme und/oder Spannungen zu übertragen. In erfindungsgemässe Steckverbindungen kann zusätzlich z.B. auch eine optische Datenübertragung oder dergleichen integriert sein.

Sowohl beim männlichen Steckverbinder als auch beim weiblichen Steckverbinder der erfindungsgemässen Steckverbindung kann es sich um Kabelstecker, also um Steckverbinder, welche direkt am Kabel angeschlossen werden, aber auch um sogenannte Chassisstecker, also Steckverbinder die an Gerätegehäusen angebracht werden, handeln. Der weibliche Steckverbinder könnte auch als Buchse bezeichnet werden.

Die Vorsprünge könnten auch als Erhebungen, die Aufnahmeschlitze könnten auch als Vertiefungen oder Eintiefungen oder Nuten bezeichnet werden. Die Vorsprünge können sowohl an der Einsteckfortsatzmantelwand als auch an der Einsteckfortsatzaufnahmemantelwand angeordnet sein und über diese hinausstehen. Sie können nach innen, also zum jeweiligen Innenraum aber auch nach aussen weisen. Entsprechend können auch die Aufnahmeschlitze sowohl an der Einsteckfortsatzmantelwand als auch an der Einsteckfortsatzaufnahmemantelwand angebracht bzw. in die jeweilige Mantelwand eingebracht sein. Auch Mischformen sind denkbar. Es kann sich pro Mantelwand um einen, aber auch mehrere Vorsprünge und/oder Aufnahmeschlitze handeln. Im Folgenden wird in der Regel in der Einzahl von dem Vorsprung und dem Aufnahmeschlitz gesprochen. Dies ist aber nur eine sprachliche Vereinfachung. Es kann sich in allen nachfolgend geschilderten Ausführungsvarianten um einen oder mehrere Vorsprünge aber auch um einen oder mehrere Aufnahmeschlitze handeln. Die Vorsprünge und die dazu korrespondierenden Aufnahmeschlitze dienen dazu, dass der männliche Steckverbinder im unbeschädigten Zustand der Vorsprünge und Aufnahmeschlitze nur ausgehend von der eindeutigen, von dem Vorsprung und dem Aufnahmeschlitz vorgegebenen Einsteckstellung in der Einsteckrichtung in die Einsteckfortsatzaufnahme einsteckbar ist. Vereinfacht gesprochen sorgen die Vorsprünge und Aufnahmeschlitze im unbeschädigten Zustand und bei sachgerechter Handhabung also eigentlich dafür, dass es gar nicht zu einem falschen Einstecken des männlichen Steckverbinders in den weiblichen Steckverbinder kommt. Die Praxis hat allerdings, wie oben bereits geschildert, gezeigt, dass es durch Beschädigung, Abnutzung oder sonstige Beeinträchtigung von Vorsprüngen und Aufnahmeschlitzen aber auch durch unsachgemässe Handhabung dazu kommen kann, dass der Einsteckfortsatz des männlichen Steckverbinders ausgehend von einer falschen, von der eindeutigen vorgegebenen Einsteckstellung abweichenden Stellung in die Einsteckfortsatzaufnahme des weiblichen Steckverbinders eingesteckt werden kann. In diesem Fall verhindert das erfindungsgemässe Formteil in Zusammenwirkung mit dem entsprechenden Gegenformteil zumindest, dass der männliche Steckverbinder so weit in den weiblichen Steckverbinder eingeschoben werden kann, dass die elektrischen Kontakte und die elektrischen Gegenkontakte falsch miteinander verbunden werden. Die eindeutige, von dem Vorsprung und dem Aufnahmeschlitz vorgegebene Einsteckstellung wird hier kurz auch als eindeutige vorgegebene Einsteckstellung oder nur als vorgegebene Einsteckstellung bezeichnet.

Der zu einem jeweiligen Vorsprung korrespondierende Aufnahmeschlitz entspricht in seiner Ausformung und Lage so der Form und Position bzw. Lage des entsprechenden Vorsprungs, dass im unbeschädigten Zustand von Vorsprung und Aufnahmeschlitz und bei sachgerechter Anwendung ein Einstecken eben nur ausgehend von der eindeutigen vorgegebenen Einsteckstellung aus möglich ist.

Der Begriff der elektrischen Gegenkontakte wird lediglich zur Klarstellung verwendet, dass es sich hierbei um die elektrischen Kontaktelemente des weiblichen Steckverbinders handelt. Weder der Begriff der elektrischen Kontakte des männlichen Steckverbinders noch der der elektrischen Gegenkontakte des weiblichen Steckverbinders sagt irgendetwas über die Anzahl und physische Ausgestaltung der jeweiligen elektrischen Kontaktelemente aus. Diese kann sehr verschieden und entsprechend korrespondierend zueinander ausgebildet sein. Sowohl die Anzahl der elektrischen Kontakte des männlichen Steckverbinders als auch die Anzahl der elektrischen Gegenkontakte des weiblichen Steckverbinders können variieren. Es kann sich um ein, zwei, drei oder mehr elektrische Kontakte und entsprechend auch um ein, zwei, drei oder mehr elektrische Gegenkontakte handeln. Besonders bevorzugt sind drei elektrische Kontakte und entsprechend drei elektrische Gegenkontakte. In der Regel entspricht bei erfindungsgemässen Steckverbindungen die Anzahl der elektrischen Kontakte des männlichen Steckverbinders der Anzahl der elektrischen Gegenkontakte des weiblichen Steckverbinders.

Bevorzugte Ausgestaltungsformen der Erfindung sehen vor, dass das Formteil zumindest eine Anschlagfläche und das Gegenformteil zumindest eine Gegenanschlagfläche aufweisen, wobei zur Ausbildung der Sperrvorrichtung die Anschlagfläche und die Gegenanschlagfläche beim Einstecken des Einsteckfortsatzes in der Einsteckrichtung in die Einsteckfortsatzaufnahme ausgehend von einer von der eindeutigen vorgegebenen Einsteckstellung abweichenden Stellung bereits bei nicht vollständig in der Einsteckrichtung eingestecktem Einsteckfortsatz und noch von den Gegenkontakten entfernten Kontakten aneinander anschlagen und zur Verhinderung des elektrischen Kontaktierens der elektrischen Kontakte mit den elektrischen Gegenkontakten ein vollständiges Einstecken des Einsteckfortsatzes in der Einsteckrichtung in die Einsteckfortsatzaufnahme verhindern.

Bei der Verwendung der Begriffe Formteil und Gegenformteil wie auch Anschlagfläche und Gegenanschlagfläche handelt es sich, wie bei den elektrischen Kontakten und den elektrischen Gegenkontakten ebenfalls letztendlich um eine Konvention, die lediglich dazu dient, die sprachliche Zuordnung zum männlichen bzw. weiblichen Steckverbinder zu vereinfachen und zu vereinheitlichen. Diese Begriffe sagen daher noch nichts über die konkrete Ausgestaltung und Anordnung im jeweiligen Steckverbinder aus.

Besonders bevorzugte Ausgestaltungsformen der Erfindung sehen vor, dass das Formteil zentral im Einsteckfortsatzinnenraum, vorzugsweise auf einer Längsmittelachse des Einsteckfortsatzes, angeordnet ist. Bevorzugt befindet sich das Formteil zwischen den elektrischen Kontakten im Einsteckfortsatzinnenraum. Analoges gilt günstigerweise auch für den weiblichen Steckverbinder. Auch das Gegenformteil ist also günstigerweise zentral im Einsteckfortsatzinnenraum, vorzugsweise auf einer Längsmittelachse der Einsteckfortsatzaufnahme, angeordnet. Bevorzugt befindet sich das Gegenformteil auch zwischen den elektrischen Gegenkontakten.

Wie eingangs bereits erläutert, können bei erfindungsgemässen Steckverbindungen und ihren männlichen und weiblichen Steckverbindern jeweils nur ein Vorsprung und nur ein korrespondierender Aufnahmeschlitz pro jeweiliger Mantelwand aber eben auch mehrere Vorsprünge und mehrere Aufnahmeschlitze vorgesehen sein. Es ist somit im Rahmen der Erfindung möglich, dass an einer Mantelwand, welche die Einsteckfortsatzmantelwand oder die Einsteckfortsatzaufnahmemantelwand ist, mehrere, vorzugsweise vier, voneinander verschieden ausgeformte und/oder an voneinander verschiedenen Positionen angeordnete Vorsprünge angeordnet sind und die andere dieser Mantelwände eine zu den Vorsprüngen korrespondierende Anzahl von voneinander verschieden ausgeformten und/oder an voneinander verschiedenen Positionen angeordneten Aufnahmeschlitzen aufweist. Sowohl das Formteil als auch das dazu korrespondierende Gegenformteil können sehr unterschiedlich ausgeformt sein, um die erfindungsgemässe Sperrvorrichtung und ihre Funktion darzustellen. Erfindungsgemäß ist vorgesehen, dass ein Teil, welches das Formteil oder das Gegenformteil ist, zumindest einen Freiraum aufweist, in welchen das andere dieser Teile beim Einstecken des Einsteckfortsatzes in der Einsteckrichtung in die Einsteckfortsatzaufnahme ausgehend von der vorgegebenen Einsteckstellung eindringt. Der Freiraum kann somit sowohl am Formteil als auch am Gegenformteil ausgebildet sein. Das jeweils andere Teil, also dann eben entsprechend das Gegenformteil oder das Formteil, kann beim Einstecken des Einsteckfortsatzes ausgehend von der eindeutigen vorgegebenen Einsteckstellung dann entsprechend in diesen Freiraum eindringen. In einer Draufsicht, insbesondere in Einsteckrichtung gesehen, kann der Freiraum V-förmig ausgebildet sein. Es kann sich auch um mehrere, z.B. zwei einander gegenüberliegende Freiräume handeln. Erfindungsgemäß ist das in den Freiraum oder die Freiräume eindringende Teil, also dann entsprechend das Formteil oder das Gegenformteil, im Freiraum drehbar gelagert, nämlich erfindungsgemäß drehbar zwischen zwei Drehanschlägen gelagert.

Grundsätzlich kann bei erfindungsgemässen Steckverbindungen vorgesehen sein, dass ausgehend von der eindeutigen vorgegebenen Einsteckstellung der Einsteckfortsatz ausschliesslich linear in der Einsteckrichtung in die Einsteckfortsatzaufnahme eingesteckt werden muss, um so die Endstellung zu erreichen, in der die elektrischen Kontakte mit den elektrischen Gegenkontakten elektrisch kontaktiert sind. Bevorzugte Ausgestaltungsformen der Erfindung sehen jedoch vor, dass der Einsteckfortsatz ausgehend von der vorgegebenen Einsteckstellung in der Einsteckrichtung in die Einsteckfortsatzaufnahme zum Erreichen einer vollständig eingesteckten Stellung einsteckbar ist und ausgehend von der vollständig eingesteckten Stellung um die Einsteckrichtung herum in eine Endstellung drehbar ist, wobei in der Endstellung die elektrischen Kontakte mit den elektrischen Gegenkontakten elektrisch kontaktiert sind. Die Einsteckrichtung fällt dabei günstigerweise mit den Längsmittelachsen des Einsteckfortsatzes und der Einsteckfortsatzaufnahme zusammen bzw. ist mit diesen koaxial ausgebildet. Bei diesen Ausgestaltungsformen der Erfindung ist somit vorgesehen, dass die genannte Endstellung, in der die elektrischen Kontakte mit den elektrischen Gegenkontakten elektrisch kontaktiert sind, erst dann erreicht wird, wenn ausgehend von der eindeutigen vorgegebenen Einsteckstellung zunächst ein linearer Einsteckvorgang in Einsteckrichtung stattfindet. Mit diesem linearen Einsteckvorgang wird die vollständig eingesteckte Stellung erreicht, aus der heraus der Einsteckfortsatz, vorzugsweise der gesamte männliche Steckverbinder, dann um die Einsteckrichtung herum in die Endstellung gedreht wird.

In diesem Zusammenhang ist es günstig, wenn in der Mantelwand, in der auch der Aufnahmeschlitz angeordnet ist, zumindest ein in einer Umfangsrichtung verlaufender und an den Aufnahmeschlitz anschliessender Aufnahmekanal angeordnet ist, in dem der Vorsprung beim Drehen von der vollständig eingesteckten Stellung in die Endstellung geführt ist.

Weiters ist es günstig, wenn die, vorzugsweise alle, elektrischen Kontakte auf einer gemeinsamen Kreisbahn der elektrischen Kontakte angeordnet sind und/oder dass die, vorzugsweise alle, elektrischen Gegenkontakte auf einer gemeinsamen Kreisbahn der elektrischen Gegenkontakte angeordnet sind. Bevorzugt ist auch vorgesehen, dass eine Aussenfläche der Einsteckfortsatzmantelwand und/oder eine Innenfläche der Einsteckfortsatzaufnahmemantelwand abgesehen von dort angeordneten Vorsprüngen oder Aufnahmeschlitzen und/oder dort angeordneten Aufnahmekanälen zumindest bereichsweise kreiszylindermantelförmig ausgebildet ist bzw. sind.

Weitere bevorzugte Ausgestaltungsformen erfindungsgemässer Steckverbindungen werden beispielhaft in der nachfolgenden Figurenbeschreibung anhand eines erfindungsgemässen Ausführungsbeispiels erläutert. Es zeigen:
- Fig. 1 bis 3: Ansichten eines männlichen Steckverbinders einer erfindungsgemässen Steckverbindung;
- Fig. 4 bis 6: Ansichten eines weiblichen Steckverbinders der erfindungsgemässen Steckverbindung;
- Fig. 7: einen Längsschnitt durch die Steckverbindung mit diesem männlichen und diesem weiblichen Steckverbinder in der vollständig eingesteckten Stellung entlang der Schnittlinie CC aus Fig. 8;
- Fig. 8: den Querschnitt entlang der Schnittlinie AA aus Fig. 7;
- Fig. 9: den Querschnitt entlang der Schnittlinie BB aus Fig. 8;
- Fig. 10: das Detail D aus Fig. 8;
- Fig. 11: einen Längsschnitt durch diese Steckverbindung in der Endstellung, in der die elektrischen Kontakte mit den elektrischen Gegenkontakten elektrisch kontaktiert sind, entlang der Schnittlinie GG aus Fig. 12;
- Fig. 12: den Querschnitt entlang der Schnittlinie EE aus Fig. 11;
- Fig. 13: den Querschnitt entlang der Schnittlinie FF aus Fig. 11;
- Fig. 14: das Detail H aus Fig. 12 vergrössert;
- Fig. 15: einen Längsschnitt durch die Steckverbindung, wobei allerdings der männliche Steckverbinder ausgehend von einer von der eindeutigen vorgesehenen Einsteckstellung abweichenden Stellung eingesteckt wurde, entlang der Schnittlinie KK aus Fig. 16 ;
- Fig. 16: den Querschnitt entlang der Schnittlinie II aus Fig. 15;
- Fig. 17: den Querschnitt entlang der Schnittlinie JJ aus Fig. 15 und
- Fig. 18: das Detail L aus Fig. 16, vergrössert.

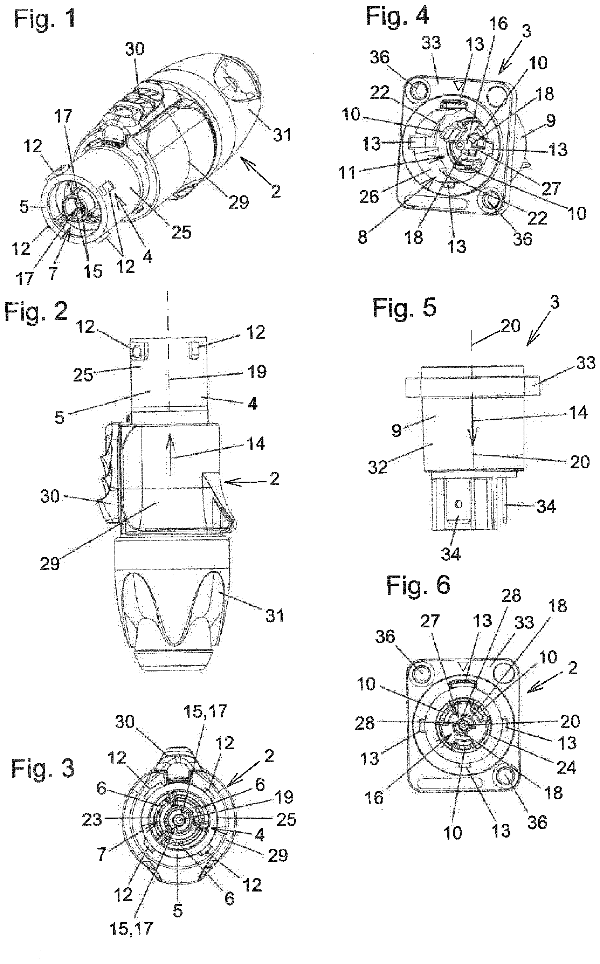

Der hier beispielhaft gezeigte männliche Steckverbinder 2 der erfindungsgemässen Steckverbindung 1 ist in diesem Beispiel ein Kabelstecker und in Fig. 1 in einer Perspektive und in Fig. 2 in einer Seitenansicht dargestellt. Fig. 3 zeigt eine Ansicht in Richtung in den Einsteckfortsatz 4 dieses männlichen Steckverbinders 2 hinein. Der korrespondierende weibliche Steckverbinder 3 ist als sogenannte Chassisbuchse bzw. als sogenannter Chassisstecker ausgebildet, welcher dazu vorgesehen ist, am Gehäuse eines Elektrogerätes befestigt zu werden. Natürlich könnte ein erfindungsgemässer weiblicher Steckverbinder 3 so wie der hier gezeigte männliche Steckverbinder 2 auch als Kabelstecker ausgeführt sein, ohne dass hierdurch etwas an den erfindungswesentlichen Bauteilen geändert werden müsste. Dies gilt andersherum auch für den männlichen Steckverbinder 2. Auch dieser könnte grundsätzlich als ein Chassisstecker ausgeführt sein. Der hier gezeigte weibliche Steckverbinder 3 kann mittels der Befestigungslöcher 36 im Flansch 33 in an sich bekannter Art und Weise am Gehäuse des Elektrogerätes angeschraubt bzw. anderweitig befestigt werden. Fig. 4 zeigt eine perspektivische Ansicht auf diesen weiblichen Steckverbinder 3, Fig. 5 eine Seitenansicht. Fig. 6 zeigt einen Blick in den Einsteckfortsatzaufnahmeinnenraum 11 dieses weiblichen Steckverbinders 3 bzw. dessen Einsteckfortsatzaufnahme 8.

Der männliche Steckverbinder 2 weist, wie an sich bekannt, ein Gehäuse 29 auf, über das der Einsteckfortsatz 4 übersteht. Auf der dem Einsteckfortsatz 4 entgegengesetzten Seite befindet sich die Kabeltülle 31, durch die hindurch ein elektrisches Kabel in den männlichen Steckverbinder 2 in an sich bekannter Art und Weise eingeführt und dort an den elektrischen Kontakten 6 des Einsteckfortsatzes 4 bzw. männlichen Steckverbinders 2 kontaktiert werden kann. Im gezeigten Ausführungsbeispiel befindet sich aussen am Gehäuse 29 des männlichen Steckverbinders 2 auch ein an sich bekannter Schieber 30, welcher zum Lösen einer wie beim Stand der Technik ausgebildeten Verriegelung vorgesehen ist. Das Gehäuse 29, die Kabeltülle 31 und der Schieber 30 sind letztendlich nicht erfindungsrelevant und können ebenso wie das Innenleben des Gehäuses 29 und der Kabeltülle 31, wie beim Stand der Technik an sich bekannt, ausgeführt sein.

Der Einsteckfortsatz 4 weist eine Einsteckfortsatzmantelwand 5 auf, welche im gezeigten Ausführungsbeispiel, abgesehen von den daran angeordneten und nach aussen stehenden Vorsprüngen 12 kreiszylindermantelförmig ausgebildet ist, also insbesondere eine kreiszylindermantelförmige Aussenfläche 25 aufweist. Im gezeigten Ausführungsbeispiel sind an dieser Aussenfläche 25 insgesamt 4 Vorsprünge 12 nach aussen abstehend angeordnet. Diese vier Vorsprünge 12 unterscheiden sich in ihrer Form und auch in ihrer Position. Wie bereits eingangs ausgeführt, können es auch mehr oder weniger und anders ausgeformte und auch anders eingeordnete Vorsprünge 12 sein. Genauso gut könnten sich in der Einsteckfortsatzmantelwand 5 auch entsprechende Aufnahmeschlitze 13 befinden, wenn die entsprechenden Vorsprünge 12 in der Einsteckfortsatzaufnahmemantelwand 9 des Einsteckfortsatzes 4 des weiblichen Steckverbinders 3 ausgebildet wären. Auch Mischformen, bei denen sowohl Vorsprünge 12 als auch Aufnahmeschlitze 13 sowohl an der Einsteckfortsatzmantelwand 5 als auch an der Einsteckfortsatzaufnahmemantelwand 9 angeordnet sind, sind denkbar.

Die Einsteckfortsatzmantelwand 5 umgibt jedenfalls den Einsteckfortsatzinnenraum 7, in dem sich die elektrischen Kontakte 6 befinden. Die Einsteckfortsatzmantelwand 5 ist, wie im hier gezeigten Ausführungsbeispiel, günstigerweise so lang ausgeführt, dass die elektrischen Kontakte 6 im Einsteckfortsatzinnenraum 7 vollständig versenkt angeordnet sind und über diesen nicht überstehen. Bei dem Blick gemäss Fig. 3 in den Einsteckfortsatzinnenraum 7 hinein, sind die versenkt angeordneten elektrischen Kontakte 6 gut zu erkennen. Zu sehen ist auch, dass diese in diesem Ausführungsbeispiel auf einer gemeinsamen Kreisbahn 23 angeordnet sind. Zentral im Einsteckfortsatzinnenraum 7 ist erfindungsgemäss das Formteil 15 mit seinen nach aussen weisenden Anschlagflächen 17 angeordnet. Die Form und Funktion dieses Formteils 15 und insbesondere seine Wechselwirkung mit dem Gegenformteil 16 des weiblichen Steckverbinders 3 wird nachfolgend noch genauer erläutert. Das zentral angeordnete Formteil 15 liegt hier auf der Längsmittelachse 19 des Einsteckfortsatzes 4 und zwischen den elektrischen Kontakten 6.

Die Einsteckfortsatzaufnahmemantelwand 9 der Einsteckfortsatzaufnahme 8 umgibt den Einsteckfortsatzaufnahmeinnenraum 11, in welchem die elektrischen Gegenkontakte 10 angeordnet sind. Auch diese elektrischen Gegenkontakte 10 sind in diesem Ausführungsbeispiel alle auf einer gemeinsamen Kreisbahn 24 angeordnet und im Einsteckfortsatzaufnahmeinnenraum 11 versenkt angeordnet. Die Aussenkontakte 34, welche mit den elektrischen Gegenkontakten 10 in leitfähiger Verbindung stehen, dienen dem Anschluss von Kabeln oder dergleichen und stehen hinten, also auf der vom Flansch 33 abgewandten Seite über das Gehäuse 32 des weiblichen Steckverbinders 3 über. Zentral im Einsteckfortsatzaufnahmeinnenraum 11 ist auch das erfindungsgemässe Gegenformteil 16 mit seinen beiden Gegenanschlagflächen 18, den beiden Freiräumen 27 und den Drehanschlägen 28 angeordnet. Durch das Gegenformteil 16 hindurch verläuft auch die Längsmittelachse 20 der Einsteckfortsatzaufnahme 8. Die Einsteckfortsatzaufnahmemantelwand 9 weist eine kreiszylinderförmige Innenfläche 26 auf, welche in diesem Ausführungsbeispiel durch die Aufnahmeschlitze 13 durchbrochen ist. An jeden Aufnahmeschlitz 13 schliesst ein ebenfalls in der Einsteckfortsatzaufnahmemantelwand 9 angeordneter, die Innenfläche 26 durchbrechender Aufnahmekanal 22 an.

Bei einer sachgerechten Anwendung wird der männliche Steckverbinder 2 mit seinem Einsteckfortsatz 4 ausgehend von der eindeutigen, von den Vorsprüngen 12 und den korrespondierenden Aufnahmeschlitzen 13 vorgegebenen Einsteckstellung in der Einsteckrichtung 14 in die Einsteckfortsatzaufnahme 8 eingesteckt. Hierdurch kann bei einem entsprechend weiten Einschieben des Einsteckfortsatzes 4 in die Einsteckfortsatzaufnahme 8 in Einsteckrichtung 14 die vollständig eingesteckte Stellung erreicht werden, in der die elektrischen Kontakte 6 in diesem Ausführungsbeispiel aber noch nicht mit den elektrischen Gegenkontakten 10 elektrisch leitend verbunden bzw. kontaktiert sind. Um die Endstellung, in der dies der Fall ist, zu erreichen, muss der Einsteckfortsatz 4 zunächst noch von der vollständig eingesteckten Stellung ausgehend in Umfangsrichtung 21 gedreht werden, erst dann kommt es in diesem Ausführungsbeispiel zu einem elektrischen Kontaktieren der elektrischen Kontakte 6 mit den elektrischen Gegenkontakten 10.

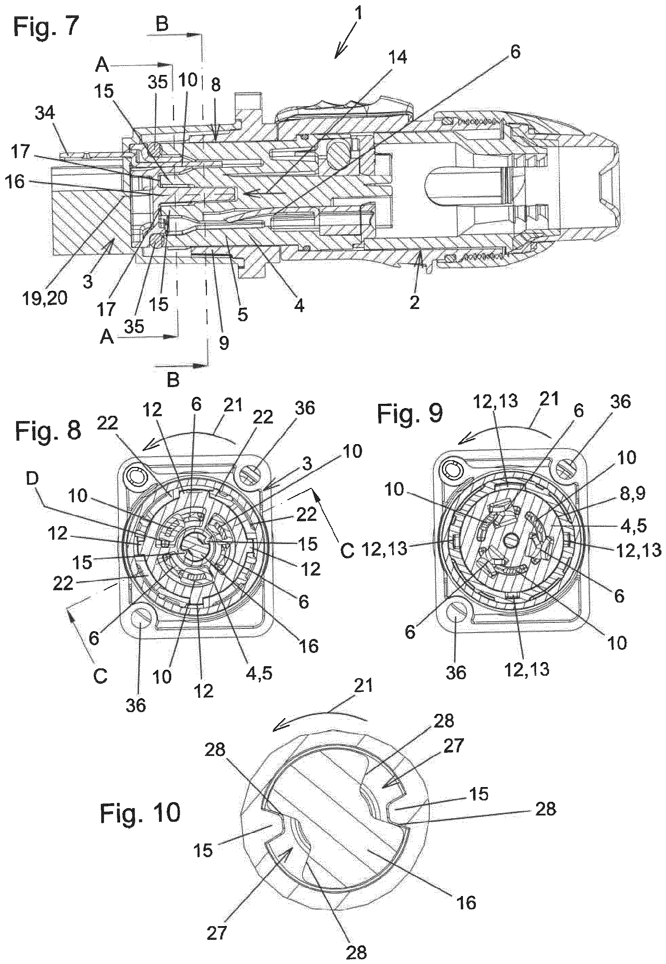

In den Fig. 7 bis 10 ist die vollständig eingesteckte Stellung gezeigt, in der noch keine elektrische Kontaktierung zwischen den elektrischen Kontakten 6 und den elektrischen Gegenkontakten 10 erfolgt ist. Letzteres ist besonders gut in Fig. 9 zu erkennen. In den Fig. 7, 8 und 10 ist auch gut zu sehen, dass bei diesem Einsteckvorgang, ausgehend von der durch die unbeschädigten Vorsprünge 12 und die korrespondierenden Aufnahmeschlitze 13 vorgegebenen eindeutigen Einsteckstellungen die Nasen des Formteils 15 des Einsteckfortsatzes 4 jeweils in einen der hier V-förmig ausgebildeten Freiräume 27 des Gegenformteils 16 eingedrungen sind, sodass auch die Anschlagflächen 17 des Formteils 15 beim Einsteckvorgang nicht mit den Gegenanschlagflächen 18 des Gegenformteils 16 kollidiert bzw. in Wirkverbindung getreten sind.

In dem hier gezeigten Ausführungsbeispiel der Steckverbindung 1 befindet sich eine an sich bekannte Dichtung 35 im Einsteckfortsatzaufnahmeraum 8 des weiblichen Steckverbinders 3. Gegen diese Dichtung 35 wird das vordere Ende der Einsteckfortsatzmantelwand 5 in der vollständig eingesteckten Stellung gedrückt.

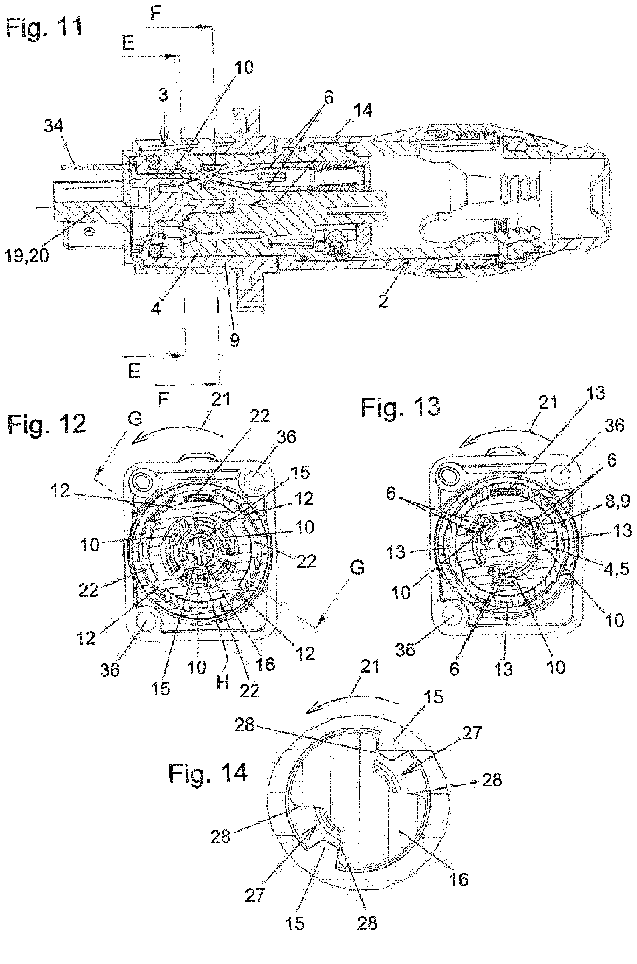

Zum Erreichen der Endstellung gemäss der Fig. 11 bis 14 und damit zum elektrischen Kontaktieren der elektrischen Kontakte 6 mit den elektrischen Gegenkontakten 10 wird der Einsteckfortsatz 4 bzw. der gesamte männliche Steckverbinder 2 ausgehend von der vollständig eingesteckten Stellung gemäss der Fig. 7 bis 10 in Umfangsrichtung 21 gedreht. Dabei werden die Vorsprünge 12 des Einsteckfortsatzes in den Aufnahmekanälen 22 der Einsteckfortsatzaufnahmemantelwand 9 geführt. In der in den Fig. 11 bis 14 gezeigten Endstellung sind dann die elektrischen Kontakte 6 mit den elektrischen Gegenkontakten 10 elektrisch leitend verbunden, wie dies besonders gut in den Fig. 11 und 13 zu sehen ist. In den Fig. 12 und insbesondere 14 ist gut zu sehen, dass durch diese Drehbewegung in Umfangsrichtung 21 die Nasen des Formteils 15 und damit das Formteil 15 an sich in den Freiräumen 27 des Gegenformteils 16 von einem Drehanschlag 28, siehe Fig. 10 , zum anderen Drehanschlag 28, siehe Fig. 14 , gedreht wurde. Diese Drehanschläge 28 können als zusätzliche Begrenzung der Drehbewegung in Umfangsrichtung 21 eingesetzt werden, müssen aber nicht zwingend vorhanden sein.

Anhand der Fig. 1 bis 14 wurde bislang die sachgemässe Verwendung der erfindungsgemässen Steckverbindung 1 beschrieben, bei welcher sich die Vorsprünge 12 und die korrespondierenden Aufnahmeschlitze 13 in einem unbeschädigten Zustand befinden und die eindeutige Einsteckstellung vorgeben.

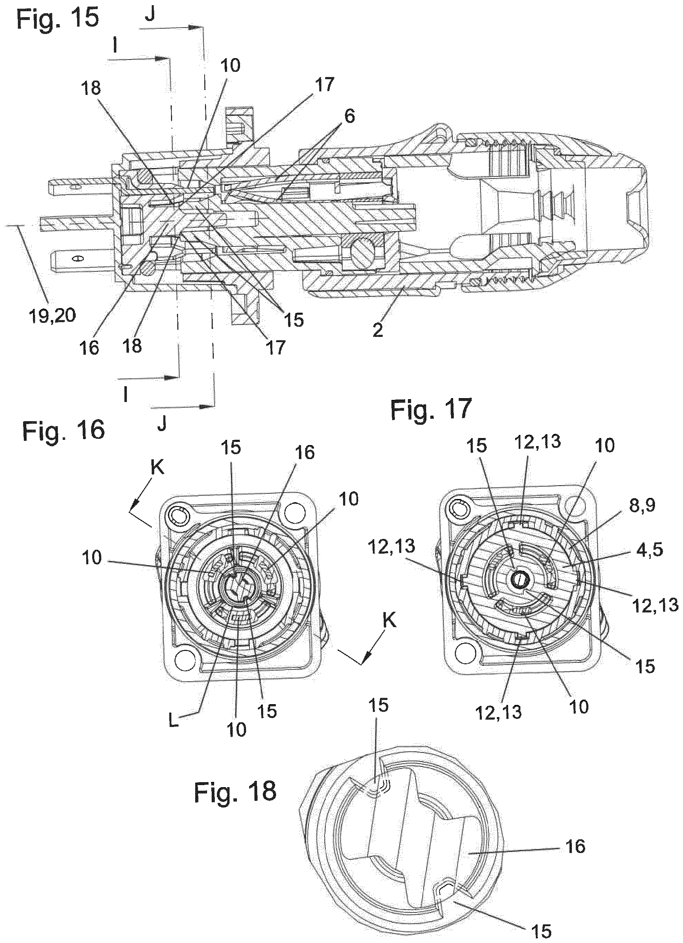

Wie eingangs erläutert, sind Fälle aufgetreten, bei denen durch Beschädigung, Abrieb oder dergleichen die Vorsprünge 12 und/oder die Aufnahmeschlitze 13 beschädigt wurden, sodass hierdurch oder durch schlichtweg unsachgemässe Verwendung ein Einsteckvorgang des Einsteckfortsatzes 4 in die Einsteckfortsatzaufnahme 8 ausgehend von einer von der eindeutigen vorgegebenen Einsteckstellung abweichenden Stellung durchgeführt wurde. In den Fig. 15 bis 18 ist nun gezeigt, wie in einem solchen Fall durch das Zusammenwirken des erfindungsgemässen Formteils 15 mit dem erfindungsgemässen Gegenformteil 16 eine Sperrvorrichtung gebildet wird, welche verhindert, dass die elektrischen Kontakte 6 mit den elektrischen Gegenkontakten 10 elektrisch leitend verbunden bzw. elektrisch kontaktiert werden. In den Fig. 15, 16 und 18 ist gut zu sehen, wie bei diesem Einsteckvorgang die Anschlagflächen 17 des Formteils 15 an den Gegenanschlagflächen 18 des Gegenformteils 16 anschlagen, bevor es zu einem elektrischen Verbinden bzw. Kontaktieren der elektrischen Kontakte 6 mit den falschen elektrischen Gegenkontakten 10 kommen kann. Das Zusammenwirken von Formteil 15 und Gegenformteil 16 bzw. ihrer Anschläge 17 mit den Gegenanschlägen 18 verhindert somit ein elektrisches Kontaktieren der elektrischen Kontakte 6 mit den elektrischen Gegenkontakten 10, da der Einsteckfortsatz 4 in der Einsteckrichtung 14 nicht vollständig in die Einsteckfortsatzaufnahme 8 eingesteckt werden kann. Dies ist besonders gut in Fig. 15 zu sehen, indem dort, wenn die Anschlagflächen 17 bereits an den Gegenanschlagflächen 18 anliegen, die elektrischen Kontakte 6 immer noch von den elektrischen Gegenkontakten 10 entfernt angeordnet sind und so mit diesen nicht in elektrisch leitende Verbindung treten können.

### Bezugszeichenaufstellung

| | | | |
|---|---|---|---|
| 1 | Steckverbindung | 36 | Befestigungsloch |
| 2 | männlicher Steckverbinder | | |
| 3 | weiblicher Steckverbinder | | |
| 4 | Einsteckfortsatz | | |
| 5 | Einsteckfortsatzmantelwand | | |
| 6 | elektrischer Kontakt | | |
| 7 | Einsteckfortsatzinnenraum | | |
| 8 | Einsteckfortsatzaufnahme | | |
| 9 | Einsteckfortsatzaufnahmemantelwand | | |
| 10 | elektrischer Gegenkontakt | | |
| 11 | Einsteckfortsatzaufnahmeinnenraum | | |
| 12 | Vorsprung | | |
| 13 | Aufnahmeschlitz | | |
| 14 | Einsteckrichtung | | |
| 15 | Formteil | | |
| 16 | Gegenformteil | | |
| 17 | Anschlagfläche | | |
| 18 | Gegenanschlagfläche | | |
| 19 | Längsmittelachse | | |
| 20 | Längsmittelachse | | |
| 21 | Umfangsrichtung | | |
| 22 | Aufnahmekanal | | |
| 23 | gemeinsame Kreisbahn | | |
| 24 | gemeinsame Kreisbahn | | |
| 25 | Aussenfläche | | |
| 26 | Innenfläche | | |
| 27 | Freiraum | | |
| 28 | Drehanschlag | | |
| 29 | Gehäuse | | |
| 30 | Schieber | | |
| 31 | Kabeltülle | | |
| 32 | Gehäuse | | |
| 33 | Flansch | | |
| 34 | Aussenkontakt | | |
| 35 | Dichtung | | |

## Patentansprüche

1. Steckverbindung (1) zur Übertragung von elektrischem Strom mit einem männlichen Steckverbinder (2) und einem weiblichen Steckverbinder (3), wobei
der männliche Steckverbinder (2) einen Einsteckfortsatz (4) mit einer Einsteckfortsatzmantelwand (5) und elektrischen Kontakten (6) aufweist, wobei in einem von der Einsteckfortsatzmantelwand (5) umgebenen Einsteckfortsatzinnenraum (7) die elektrischen Kontakte (6) angeordnet sind, und
der weibliche Steckverbinder (3) eine Einsteckfortsatzaufnahme (8) mit einer Einsteckfortsatzaufnahmemantelwand (9) und elektrischen Gegenkontakten (10) aufweist, wobei in einem von der Einsteckfortsatzaufnahmemantelwand (9) umgebenen Einsteckfortsatzaufnahmeinnenraum (11) die elektrischen Gegenkontakte (10) angeordnet sind,
wobei an einer Mantelwand, welche die Einsteckfortsatzmantelwand (5) oder die Einsteckfortsatzaufnahmemantelwand (9) ist, zumindest ein Vorsprung (12) angeordnet ist und die andere dieser Mantelwände zumindest einen, zu dem Vorsprung (12) korrespondierenden Aufnahmeschlitz (13) aufweist, wobei in einem unbeschädigten Zustand des Vorsprungs (12) und des Aufnahmeschlitzes (13) der Einsteckfortsatz (4) ausschließlich ausgehend von einer eindeutigen, von dem Vorsprung (12) und dem Aufnahmeschlitz (13) vorgegebenen Einsteckstellung in einer Einsteckrichtung (14) in die Einsteckfortsatzaufnahme (8) einsteckbar ist,
wobei der männliche Steckverbinder (2) im Einsteckfortsatzinnenraum (7) zusätzlich zumindest ein Formteil (15) und der weibliche Steckverbinder (3) im Einsteckfortsatzaufnahmeinnenraum (11) zusätzlich zumindest ein Gegenformteil (16) aufweisen, wobei das Formteil (15) und das Gegenformteil (16) gemeinsam eine Sperrvorrichtung zur Verhinderung eines elektrischen Kontaktierens der elektrischen Kontakte (6) mit den elektrischen Gegenkontakten (10) bei einem Einstecken des Einsteckfortsatzes (4) in die Einsteckfortsatzaufnahme (8) ausgehend von einer, von der eindeutigen vorgegebenen Einsteckstellung abweichenden Stellung bilden,
wobei ein Teil, welches das Formteil (15) oder das Gegenformteil (16) ist, zumindest einen, vorzugsweise in einer Draufsicht gesehen V-förmigen, Freiraum (27) aufweist, in welchen das andere dieser Teile beim Einstecken des Einsteckfortsatzes (4) in der Einsteckrichtung (14) in die Einsteckfortsatzaufnahme (8) ausgehend von der eindeutigen vorgegebenen Einsteckstellung eindringt,
**dadurch gekennzeichnet, dass**
das in den Freiraum (27) eindringende Teil im Freiraum (27) zwischen zwei Drehanschlägen (28) drehbar ist.

2. Steckverbindung nach Anspruch 1, **dadurch gekennzeichnet, dass** das Formteil (15) zumindest eine Anschlagfläche (17) und das Gegenformteil (16) zumindest eine Gegenanschlagfläche (18) aufweisen, wobei zur Ausbildung der Sperrvorrichtung die Anschlagfläche (17) und die Gegenanschlagfläche (18) beim Einstecken des Einsteckfortsatzes (4) in der Einsteckrichtung in die Einsteckfortsatzaufnahme (8) ausgehend von einer von der eindeutigen vorgegebenen Einsteckstellung abweichenden Stellung bereits bei nicht vollständig in der Einsteckrichtung (14) eingestecktem Einsteckfortsatz (4) und noch von den Gegenkontakten (10) entfernten Kontakten (6) aneinander anschlagen und zur Verhinderung des elektrischen Kontaktierens der elektrischen Kontakte (6) mit den elektrischen Gegenkontakten (10) ein vollständiges Einstecken des Einsteckfortsatzes (4) in der Einsteckrichtung (14) in die Einsteckfortsatzaufnahme (8) verhindern.

3. Steckverbindung (1) nach Anspruch 1 oder 2, **dadurch gekennzeichnet, dass** das Formteil (15) zentral im Einsteckfortsatzinnenraum (7), vorzugsweise auf einer Längsmittelachse (19) des Einsteckfortsatzes (4), und/oder zwischen den elektrischen Kontakten (6) angeordnet ist.

4. Steckverbindung (1) nach einem der Ansprüche 1 bis 3, **dadurch gekennzeichnet, dass** das Gegenformteil (16) zentral im Einsteckfortsatzaufnahmeinnenraum (11), vorzugsweise auf einer Längsmittelachse (20) der Einsteckfortsatzaufnahme (8), und/oder zwischen den elektrischen Gegenkontakten (10) angeordnet ist.

5. Steckverbindung (1) nach einem der Ansprüche 1 bis 4, **dadurch gekennzeichnet, dass** an einer Mantelwand, welche die Einsteckfortsatzmantelwand (5) oder die Einsteckfortsatzaufnahmemantelwand (9) ist, mehrere, vorzugsweise vier, voneinander verschieden ausgeformte und/oder an voneinander verschiedenen Positionen angeordnete Vorsprünge (12) angeordnet sind und die andere dieser Mantelwände eine zu den Vorsprüngen (12) korrespondierende Anzahl von voneinander verschieden ausgeformten und/oder an voneinander verschiedenen Positionen angeordneten Aufnahmeschlitzen (13) aufweist.

6. Steckverbindung (1) nach einem der Ansprüche 1 bis 5, **dadurch gekennzeichnet, dass** der Einsteckfortsatz (4) ausgehend von der eindeutigen vorgegebenen Einsteckstellung in der Einsteckrichtung (14) in die Einsteckfortsatzaufnahme (8) zum Erreichen einer vollständig eingesteckten Stellung einsteckbar ist und ausgehend von der vollständig eingesteckten Stellung um die Einsteckrichtung (14) herum in eine Endstellung drehbar ist, wobei in der Endstellung die elektrischen Kontakte (6) mit den elektrischen Gegenkontakten (10) elektrisch kontaktiert sind.

7. Steckverbindung (1) nach Anspruch 6, **dadurch gekennzeichnet, dass** in der Mantelwand, in der auch der Aufnahmeschlitz (13) angeordnet ist, zumindest ein in einer Umfangsrichtung (21) verlaufender und an den Aufnahmeschlitz (13) anschliessender Aufnahmekanal (22) angeordnet ist, in dem der Vorsprung (12) beim Drehen von der vollständig eingesteckten Stellung in die Endstellung geführt ist.

8. Steckverbindung (1) nach einem der Ansprüche 1 bis 7, **dadurch gekennzeichnet, dass** die, vorzugsweise alle, elektrischen Kontakte (6) auf einer gemeinsamen Kreisbahn (23) der elektrischen Kontakte (6) angeordnet sind und/oder dass die, vorzugsweise alle, elektrischen Gegenkontakte (10) auf einer gemeinsamen Kreisbahn (24) der elektrischen Gegenkontakte (10) angeordnet sind.

9. Steckverbindung (1) nach einem der Ansprüche 1 bis 8, **dadurch gekennzeichnet, dass** eine Aussenfläche (25) der Einsteckfortsatzmantelwand (5) und/oder eine Innenfläche (26) der Einsteckfortsatzaufnahmemantelwand (9) abgesehen von dort angeordneten Vorsprüngen (12) oder Aufnahmeschlitzen (13) und/oder dort angeordneten Aufnahmekanälen (22) zumindest bereichsweise kreiszylindermantelförmig ausgebildet ist bzw. sind.

## Claims

1. Connector (1) for transmitting electrical current, having a male plug connector (2) and a female plug connector (3), wherein
the male plug connector (2) has a plug-in extension (4) with a plug-in extension sheath wall (5) and electrical contacts (6), wherein the electrical contacts (6) are arranged in a plug-in extension interior (7) surrounded by the plug-in extension sheath wall (5), and
the female plug connector (3) has a plug-in extension receptacle (8) with a plug-in extension receptacle sheath wall (9) and electrical mating contacts (10), wherein the electrical mating contacts (10) are arranged in a plug-in extension receptacle interior (11) surrounded by the plug-in extension receptacle sheath wall (9),
wherein at least one projection (12) is arranged on a sheath wall which is the plug-in extension sheath wall (5) or the plug-in extension receptacle sheath wall (9), at least one projection (12) is arranged and the other of these sheath walls has at least one receiving slot (13) corresponding to the projection (12), wherein, in an undamaged state of the projection (12) and the receiving slot (13), the plug-in extension (4) can be inserted in a plug-in direction (14) into the plug-in extension receptacle (8) exclusively starting from an unambiguous plug-in position predetermined by the projection (12) and the receiving slot (13),
wherein the male plug connector (2) additionally has at least one molded part (15) in the plug-in extension interior (7) and the female plug connector (3) additionally has at least one mating molded part (16) in the plug-in extension receptacle interior (11), wherein the molded part (15) and the mating molded part (16) together form a blocking device for preventing electrical contact between the electrical contacts (6) and the electrical mating contacts (10) when the plug-in extension (4) is inserted into the plug-in extension receptacle (8) starting from a position deviating from the unambiguous predetermined plug-in position, wherein one part, which is the molded part (15) or the mating molded part (16), has at least one free space (27), preferably V-shaped when viewed from above, into which the other of these parts penetrates during insertion of the plug-in extension (4) in the plug-in direction (14) into the plug-in extension receptacle (8) starting from the unambiguous predetermined plug-in position,
**characterized in that**
the part penetrating into the free space (27) is rotatable in the free space (27) between two rotary stops (28).

2. Connector according to claim 1, **characterized in that** the molded part (15) has at least one stop surface (17) and the mating molded part (16) has at least one mating stop surface (18), wherein, in order to form the blocking device, the stop surface (17) and the mating stop surface (18), when the plug-in extension (4) is inserted in the plug-in direction into the plug-in extension receptacle (8) starting from a position deviating from the unambiguous predetermined plug-in position even when the plug-in extension (4) is not fully inserted in the plug-in direction (14) and with contacts (6) still remote from the mating contacts (10), strike one another and, in order to prevent electrical contact between the electrical contacts (6) and the electrical mating contacts (10), prevent complete insertion of the plug-in extension (4) in the plug-in direction (14) into the plug-in extension receptacle (8).

3. Connector (1) according to claim 1 or 2, **characterized in that** the molded part (15) is arranged centrally in the plug-in extension interior (7), preferably on a longitudinal central axis (19) of the plug-in extension (4), and/or between the electrical contacts (6).

4. Connector (1) according to one of claims 1 to 3, **characterized in that** the mating molded part (16) is arranged centrally in the plug-in extension receptacle interior (11), preferably on a longitudinal central axis (20) of the plug-in extension receptacle (8), and/or between the electrical mating contacts (10).

5. Connector (1) according to one of claims 1 to 4, **characterized in that** a plurality of projections (12), preferably four thereof, which are shaped differently from one another and/or arranged at different positions from one another, are arranged on one sheath wall, which is the plug-in extension sheath wall (5) or the plug-in extension receptacle sheath wall (9), and the other of these sheath walls has a number of receiving slots (13) which correspond to the projections (12) and are shaped differently from one another and/or arranged at different positions from one another.

6. Connector (1) according to one of claims 1 to 5, **characterized in that** the plug-in extension (4) can be plugged into the plug-in extension receptacle (8) in the plug-in direction (14), starting from the unambiguous predetermined plug-in position, to reach a fully plugged-in position and, starting from the fully plugged-in position, can be rotated about the plug-in direction (14) into an end position, wherein the electrical contacts (6) are electrically contacted with the electrical mating contacts (10) in the end position.

7. Connector (1) according to claim 6, **characterized in that** in the sheath wall, in which the receiving slot (13) is also arranged, at least one receiving channel (22) is arranged which extends in a circumferential direction (21) and adjoins the receiving slot (13) and in which the projection (12) is guided during rotation from the fully inserted position into the end position.

8. Connector (1) according to one of claims 1 to 7, **characterized in that** the, preferably all, electrical contacts (6) are arranged on a common circular path (23) of the electrical contacts (6) and/or **in that** the, preferably all, electrical mating contacts (10) are arranged on a common circular path (24) of the electrical mating contacts (10).

9. Connector (1) according to one of claims 1 to 8, **characterized in that** an outer surface (25) of the plug-in extension sheath wall (5) and/or an inner surface (26) of the plug-in extension receptacle sheath wall (9) is or are at least partially circular-cylindrical in shape, apart from projections (12) or receiving slots (13) arranged there and/or receiving channels (22) arranged there.

## Revendications

1. Connexion enfichable (1) pour la transmission de courant électrique, comportant un connecteur mâle (2) et un connecteur femelle (3), dans laquelle
le connecteur mâle (2) présente un prolongement d'enfichage (4) avec une paroi d'enveloppe de prolongement d'enfichage (5) et des contacts électriques (6), les contacts électriques (6) étant disposés dans un espace intérieur de prolongement d'enfichage (7) entouré par la paroi d'enveloppe de prolongement d'enfichage (5), et
le connecteur femelle (3) présente un logement de prolongement d'enfichage (8) avec une paroi d'enveloppe de logement de prolongement d'enfichage (9) et des contacts électriques complémentaires (10), les contacts électriques complémentaires (10) étant disposés dans un espace intérieur de logement de prolongement d'enfichage (11) entouré par la paroi d'enveloppe de logement de prolongement d'enfichage (9),
dans laquelle, sur une paroi d'enveloppe, qui est la paroi d'enveloppe de prolongement d'enfichage (5) ou la paroi d'enveloppe de logement de prolongement d'enfichage (9), au moins une saillie (12) est disposée et l'autre de ces parois d'enveloppe présente au moins une fente de réception (13) correspondant à la saillie (12), et, dans un état non endommagé de la saillie (12) et de la fente de réception (13), le prolongement d'enfichage (4) peut être enfiché exclusivement à partir d'une position d'enfichage unique, prédéfinie par la saillie (12) et la fente de réception (13), dans une direction d'enfichage (14) dans le logement de prolongement d'enfichage (8),
dans laquelle le connecteur mâle (2) présente en outre au moins une pièce profilée (15) dans l'espace intérieur de prolongement d'enfichage (7) et le connecteur femelle (3) présente en outre au moins une pièce profilée complémentaire (16) dans l'espace intérieur de logement de prolongement d'enfichage (11), la pièce profilée (15) et la pièce profilée complémentaire (16) formant ensemble un dispositif de blocage pour empêcher un contact électrique des contacts électriques (6) avec les contacts électriques complémentaires (10) lors d'un enfichage du prolongement d'enfichage (4) dans le logement de prolongement d'enfichage (8) à partir d'une position s'écartant de la position d'enfichage unique prédéfinie,
dans laquelle une pièce, qui est la pièce profilée (15) ou la pièce profilée complémentaire (16), présente au moins un espace libre (27), de préférence en forme de V, vu de dessus, dans lequel l'autre de ces pièces pénètre lors de l'enfichage du prolongement d'enfichage (4) dans la direction d'enfichage (14) dans le logement de prolongement d'enfichage (8) à partir de la position d'enfichage unique prédéfinie,
**caractérisée en ce que**
la pièce pénétrant dans l'espace libre (27) peut tourner entre deux butées de rotation (28) dans l'espace libre (27).

2. Connexion enfichable selon la revendication 1, **caractérisée en ce que** la pièce profilée (15) présente au moins une surface de butée (17) et la pièce profilée complémentaire (16) au moins une surface de butée complémentaire (18), dans laquelle, pour former le dispositif de verrouillage, la surface de butée (17) et la surface de butée complémentaire (18), lors de l'enfichage du prolongement d'enfichage (4) dans la direction d'enfichage dans le logement de prolongement d'enfichage (8) à partir d'une position s'écartant de la position d'enfichage unique prédéfinie, butent l'une contre l'autre déjà lorsque le prolongement d'enfichage (4) n'est pas complètement enfiché dans la direction d'enfichage (14) et que les contacts (6) sont encore éloignés des contacts électriques complémentaires (10), et empêchent, pour empêcher la mise en contact électrique des contacts électriques (6) avec les contacts électriques complémentaires (10), un enfichage complet du prolongement d'enfichage (4) dans la direction d'enfichage (14) dans le logement de prolongement d'enfichage (8).

3. Connexion enfichable (1) selon la revendication 1 ou 2, **caractérisée en ce que** la pièce profilée (15) est disposée de manière centrale dans l'espace intérieur de prolongement d'enfichage (7), de préférence sur un axe médian longitudinal (19) du prolongement d'enfichage (4), et/ou entre les contacts électriques (6).

4. Connexion enfichable (1) selon l'une des revendications 1 à 3, **caractérisée en ce que** la pièce profilée complémentaire (16) est disposée de manière centrale dans l'espace intérieur de logement de prolongement d'enfichage (11), de préférence sur un axe médian longitudinal (20) du logement de prolongement d'enfichage (8), et/ou entre les contacts électriques complémentaires (10).

5. Connexion enfichable (1) selon l'une des revendications 1 à 4, **caractérisée en ce que** plusieurs, de préférence quatre, saillies (12) de formes différentes les unes des autres et/ou disposées à des positions différentes les unes des autres sont disposées sur une paroi d'enveloppe qui est la paroi d'enveloppe de prolongement d'enfichage (5) ou la paroi d'enveloppe de logement de prolongement d'enfichage (9), et l'autre de ces parois d'enveloppe présente un nombre de fentes de réception (13) de formes différentes les unes des autres et/ou disposées à des positions différentes les unes des autres, qui correspond aux saillies (12).

6. Connexion enfichable (1) selon l'une des revendications 1 à 5, **caractérisée en ce que** le prolongement d'enfichage (4) peut être enfiché dans la direction d'enfichage (14) dans le logement de prolongement d'enfichage (8) à partir de la position d'enfichage unique prédéfinie pour atteindre une position entièrement enfichée et peut être tourné autour de la direction d'enfichage (14) dans une position finale à partir de la position entièrement enfichée, les contacts électriques (6) étant en contact électrique avec les contacts électriques complémentaires (10) dans la position finale.

7. Connexion enfichable (1) selon la revendication 6, **caractérisée en ce que** dans la paroi d'enveloppe, dans laquelle est également disposée la fente de réception (13), est disposé au moins un canal de réception (22) s'étendant dans une direction périphérique (21) et se raccordant à la fente de réception (13), dans lequel la saillie (12) est guidée lors de la rotation de la position entièrement enfichée dans la position finale.

8. Connexion enfichable (1) selon l'une des revendications 1 à 7, **caractérisée en ce que** les contacts électriques (6), de préférence tous les contacts électriques (6), sont disposés sur une trajectoire circulaire commune (23) des contacts électriques (6) et/ou **en ce que** les contacts électriques complémentaires (10), de préférence tous les contacts électriques complémentaires (10), sont disposés sur une trajectoire circulaire commune (24) des contacts électriques complémentaires (10).

9. Connexion enfichable (1) selon l'une des revendications 1 à 8, **caractérisée en ce qu'**une surface extérieure (25) de la paroi d'enveloppe de prolongement d'enfichage (5) et/ou une surface intérieure (26) de la paroi d'enveloppe de logement de prolongement d'enfichage (9), à l'exception de saillies (12) ou de fentes de réception (13) qui y sont disposées et/ou de canaux de réception (22) qui y sont disposés, est ou sont réalisée(s) au moins dans certaines zones en forme d'enveloppe cylindrique circulaire.
